# EUROPÄISCHE PATENTSCHRIFT

(11) **EP 1 046 213 B1**
(45) Veröffentlichungstag und Bekanntmachung des Hinweises auf die Patenterteilung: **26.05.2010**
(21) Anmeldenummer: 99948660.8
(22) Anmeldetag: 20.07.1999
(51) Int. Cl.: H02K 5/10, H02K 7/14

(54) **ELEKTROMOTORISCHE ANTRIEBSVORRICHTUNG**
ELECTROMOTIVE DRIVE DEVICE
DISPOSITIF D'ENTRAINEMENT ELECTROMOTEUR

(30) Priorität: 29.09.1998 DE 19844601
(43) Veröffentlichungstag der Anmeldung: 25.10.2000
(73) Patentinhaber: ROBERT BOSCH GMBH, 70442 Stuttgart (DE)
(72) Erfinder: LAUK, Detlef, D-77871 Renchen (DE); FISCHER, Ernst, D-76593 Gernsbach (DE); KARCHER, Hansjoerg, D-77830 Buehlertal (DE); HERP, Juergen, D-77815 Buehl (DE); MAURER, Erik, D-77815 Nuehlertal (DE); WIEGERT, Andreas, D-77876 Kappelrodeck (DE); HURST, Richard, D-77656 Offenburg (DE); WAIBEL, Anton, D-88709 Hagnau (DE)
(86) Internationale Anmeldenummer: PCT/DE1999/002239
(87) Internationale Veröffentlichungsnummer: WO 2000/019583

(56) Entgegenhaltungen:
- EP-A- 0 626 747
- US-A- 5 013 222
- PATENT ABSTRACTS OF JAPAN vol. 1999, no. 08, 30. Juni 1999 (1999-06-30) & JP 11 075343 A (JIDOSHA DENKI KOGYO CO LTD), 16. März 1999 (1999-03-16)

## Beschreibung

### Stand der Technik

Die Erfindung geht aus von einer elektromotorischen Antriebsvorrichtung für Hilfseinrichtungen in Kraftfahrzeugen, wie Schiebedächer, Fensterheber, Scheibenwischer u.dgl., nach dem Oberbegriff des Anspruchs 1.

Bei einer bekannten Antriebsvorrichtung dieser Art (DE 92 06 269 U1) ist das topf- oder kappenförmige Motorgehäuse auf einen zylinderförmigen Stutzen des Getriebegehäuses aufgeschoben, wobei sein Kappenrand von einem am Stutzen ausgebildeten Ringflansch überdeckt wird. Zwischen Kappenrand und Ringflansch liegt ein Dichtring ein.

Bei einer ebenfalls bekannten Antriebsvorrichtung (DE 25 56 240 A1) erfolgt die Festlegung von Getriebe- und Motorgehäuse aneinander dadurch, daß jedes Gehäuse mit einer radialen Schulter versehen ist, die nach dem Zusammenfügen der beiden Gehäuse mit Abstand vor der Schulter des anderen Gehäuses liegt, und daß ein Befestigungselement, das mit den Schultern keilartig zusammenwirkende Spannflächen aufweist, die beiden Gehäuse gegeneinander spannt.

### Vorteile der Erfindung

Die erfindungsgemäße Antriebsvorrichtung mit den Merkmalen des Anspruchs 1 hat demgegenüber den Vorteil, daß durch Wegfall der an den Gehäusen gesondert auszubildenden Schultern und des losen Befestigungselements die Herstellung vereinfacht und damit kostengünstiger wird. Außerdem entfallen über den Außendurchmesser der Gehäuse vorstehende Elemente, so daß der erforderliche Einbauraum für die Antriebsvorrichtung reduziert wird. Die erfindungsgemäße Rollierung gewährleistet eine verbesserte Krafteinleitung vom Motorgehäuse zu dem Getriebegehäuse und eine steife Verbindung zwischen den Gehäusen, die das Geräuschverhalten der Antriebsvorrichtung vorteilhaft beeinflußt. Gleichzeitig wird durch die erzielte großflächige und innige Verbindung der Gehäuse ein verbesserter Wärmeübergang vom Motorgehäuse zum Getriebegehäuse und damit eine verbesserte Wärmeabfuhr vom Motor erzielt. Außerdem bewirkt die Rollierverbindung eine gute Dichtung im Übergang der beiden Gehäuse.

Durch die in den weiteren Ansprüchen aufgeführten Maßnahmen sind vorteilhafte Weiterbildungen und Verbesserungen der im Anspruch 1 angegebenen Antriebsvorrichtung möglich.

Gemäß einer bevorzugten Ausführungsform der Erfindung ist das Einrollieren an zwei im Längsabstand voneinande befindlichen Stellen im Aufschubbereich des Motorgehäuses auf das Getriebegehäuse vorgenommen. Dadurch wird eine sehr zuverlässige Verbindung geschaffen, in der auch unter extremen Betriebsbedingungen langfristig kein Spiel zwischen den beiden Gehäusen auftreten kann.

Gemäß einer vorteilhaften Ausführungsform der Erfindung weist das Getriebegehäuse im Aufschubbereich des Motorgehäuses eine Ringnut auf, in die eine durch Rollieren aus dem Motorgehäuse ausgeprägte, umlaufende Ringsicke formschlüssig hineinragt. Das Vorsehen der Ringnut erleichert das Eindrücken des Motorgehäusematerials in das Getriebegehäuse und erfordert wesentlich geringere Rollierkräfte. Zwischen Ringnut und Ringsicke entsteht dabei eine gute formschlüssige Verbindung.

Eine höhere Festigkeit dieser Verbindung wird dann erreicht, wenn gemäß einer vorteilhaften Ausführungsform der Erfindung zusätzlich am Getriebegehäuse im Aufschubbereich des Motorgehäuses eine vom Motorgehäuse abgekehrte umlaufende Radialschulter ausgebildet ist und die Radialschulter von einem durch Rollieren vom Motorgehäuse einwärts gebogenen Ringbund hintergriffen wird. Das Motorgehäuse ist dann an zwei voneinande beabstandeten Stellen am Getriebegehäuse festgelegt.

### Zeichnung

Die Erfindung ist anhand von in der Zeichnung dargestellten Ausführungsbeispielen in der nachfolgenden Beschreibung näher erläutert. Es zeigen:

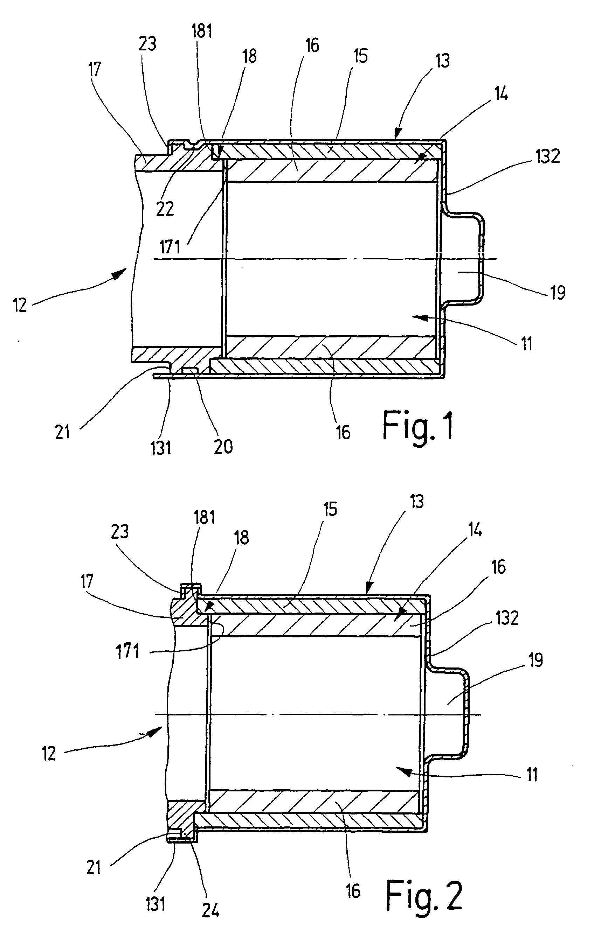

- Fig. 1 und 2: jeweils ausschnittweise eine elektromotorische Antriebsvorrichtung für Hilfseinrichtungen in Kraftfahrzeugen gemäß einem ersten und zweiten Ausführungsbeispiel.

### Beschreibung der Ausführungsbeispiele

Die in Fig. 1 und 2 jeweils ausschnittweise dargestellte elektromotorische Antriebsvorrichtung z.B. zur Verstellung von Schiebedächern, Fensterhebern, Fahrzeugsitzen u.dgl. in Kraftfahrzeugen weist einen Elektromotor 11 und zur Untersetzung der Motordrehzahl ein Getriebe 12, vorzugsweise ein Schneckengetriebe, auf. Von dem Elektromotor 11 ist in Fig. 1 und 2 lediglich das Motorgehäuse 13 und der vom Motorgehäuse 13 umschlossene Stator 14 zu sehen, der in bekannter Weise aus einem Rückschlußring 15 und daran befestigten Permanentmagnetsegmenten 16 besteht. Von dem Getriebe 12 ist lediglich das Getriebegehäuse 17 ausschnittweise dargestellt. Das kappen- oder topfartig ausgebildete Motorgehäuse 13, auch Poltopf genannt, ist mit seinem Öffnungsrand 131 auf das Getriebegehäuse 17 aufgeschoben und im Aufschubbereich an zwei im Längsabstand voneinander befindlichen Stellen in das Getriebegehäuse 17 einrolliert. Dabei ist in das dem Motorgehäuse 13 zugekehrte Stirnende 171 des Getriebegehäuses 17 eine umlaufende, winkelförmige Fase 18 eingedreht, auf die der Rückschlußring 15 bis zum Anschlag seiner ringförmigen Stirnfläche an der radialen Schenkelfläche 181 der Fase 18 formschlüssig aufgeschoben ist. Im Boden 132 des topfartigen Motorgehäuses 13 ist eine kappenförmige Vertiefung 19 koaxial ausgeformt, die zur Aufnahme eines Lagers für die Rotorwelle des Elektromotors 11 dient.

In dem Ausführungsbeispiel der Fig. 1 ist im Aufschubbereich des Motorgehäuses 13 im Getriebegehäuse 17 einerseits eine Ringnut 20 und andererseits eine umlaufende Radialschulter 21 ausgebildet, die vom Motorgehäuse 13 wegweist. Durch Ansetzen eines Rollierwerkzeugs an das Motorgehäuse 13 im Bereich der Ringnut 20 wird aus dem Motorgehäuse 13 eine umlaufende Ringsicke 22 ausgeprägt, die formschlüssig in die Ringnut 20 hineinragt. Durch Ansetzen des Rollierwerkzeugs an den Endabschnitt des Öffnungsrandes 131 des Motorgehäuses 13 hinter der Radialschulter 21 entsteht ein einwärts gebogener Ringbund 23, der die Radialschulter 21 hintergreift. Durch diese beiden Rolliervorgänge ist das Motorgehäuse 13 fest und dauerhaft mit dem Getriebegehäuse 17 verbunden.

In dem Ausführungsbeispiel der Fig. 2 ist auf die Ringnut zum Einrollieren einer Ringsicke verzichtet und stattdessen im Aufschubbereich des Motorgehäuses 13 am Getriebegehäuse 17 ein von dessen Außenumfang radial vorspringender Ringsteg 24 ausgearbeitet, dessen eine ringförmige Stegfläche die Radialschulter 21 und dessen andere ringförmige Stegfläche eine Verlängerung der radialen Schenkelfläche 181 der Fase 18 bildet. Das Motorgehäuse 13 ist an seinem dem Getriebegehäuse 17 zugekehrten Öffnungsrand 131 radial aufgeweitet und stützt sich nach Herstellen des die Radialschulter 21 hintergreifenden Ringbundes 23 auf beiden ringförmigen Stegflächen des Ringstegs 24 ab.

In Fig. 1 und 2 ist jeweils in der unteren Bildhälfte der Zustand vor dem Rollieren und in der oberen Bildhälfte der Zustand nach dem Rollieren dargestellt.

## Patentansprüche

1. Elektromotorische Antriebsvorrichtung für Hilfseinrichtungen in Kraftfahrzeugen, wie Schiebedächer, Fensterheber, Scheibenwischer u.dgl., mit einem Getriebegehäuse (17) und einem topfartigen Motorgehäuse (13), das mit seinem Öffnungsrand (131) auf das Getriebegehäuse (17) aufgeschoben und an diesem festgelegt ist, **dadurch gekennzeichnet, dass** das Motorgehäuse (13) in seinem das Getriebegehäuse (17) übergreifenden Aufschubbereich in das Getriebegehäuse (17) mittels einer Rollierverbindung einrolliert ist.

2. Antriebsvorrichtung nach Anspruch 1, **dadurch gekennzeichnet, daß** das Einrollieren an zwei im Axialabstand voneinander befindlichen Stellen vorgenommen ist.

3. Antriebsvorrichtung nach Anspruch 1 oder 2, **dadurch gekennzeichnet, daß** das Getriebegehäuse (17) im Aufschubbereich des Motorgehäuses (13) eine Ringnut (20) aufweist, in die eine durch Rollieren aus dem Motorgehäuse (13) ausgeprägte, umlaufende Ringsicke (22)formschlüssig hineinragt.

4. Antriebsvorrichtung nach einem der Ansprüche 1 - 3, **dadurch gekennzeichnet, daß** am Getriebegehäuse (17) im Motorgehäuse-Aufschubbereich eine vom Motorgehäuse (13) abgekehrte, umlaufende Radialschulter (21) ausgebildet ist, die von einem durch Rollieren vom Motorgehäuse (13)einwärts gebogenen Ringbund (23) hintergriffen ist.

5. Antriebsvorrichtung nach einem der Ansprüche 1 - 4, **dadurch gekennzeichnet, daß** das Motorgehäuse (13) einen aus Rückschlußring (15) und daran befestigten Permanentsegmenten (16) bestehenden Stator (14) umschließt und daß in das dem Motorgehäuse (13) zugekehrten Stirnende des Getriebegehäuses (17) eine umlaufende, winkelförmige Fase (18) eingedreht ist, auf die der Rückschlußring (15) bis zum Anschlag seine rringförmigen Stirnfläche an der radialen Schenkelfläche (181) der Fase (18) formschlüssig aufgeschoben ist.

6. Antriebsvorrichtung nach Anspruch 4 oder 5, **dadurch gekennzeichnet, daß** das Getriebegehäuse (17) in seinem Motorgehäuse-Aufschubbereich einen vom Außenumfang radial vorspringenden Ringsteg (24) trägt, dessen eine ringförmige Stegfläche die Radialschulter (21) und dessen andere ringförmige Stegfläche eine radiale Verlängerung der radialen Schenkelfläche (181) der Fase (18) bildet.

7. Antriebsvorrichtung nach Anspruch 6, **dadurch gekennzeichnet, daß** das Motorgehäuse (13) an seinem dem Getriebegehäuse (17) zugekehrten Öffnungsrand (131) radial aufgeweitet ist und sich auf beiden ringförmigen Stegflächen des Ringstegs (24) abstützt.

## Claims

1. Electromotive drive apparatus for auxiliary devices in motor vehicles, such as sliding roofs, window lifters, windscreen wipers and the like, having a gear mechanism housing (17) and a pot-like motor housing (13) which is pushed onto the gear mechanism housing (17) by way of its opening edge (131) and is fixed to said gear mechanism housing, **characterized in that** the motor housing (13) is roll-formed into the gear mechanism housing (17) by means of a roller-burnished connection in the push-on region, which extends over the gear mechanism housing (17), of said motor housing.

2. Drive apparatus according to Claim 1, **characterized in that** the roll-forming process is performed at two locations which are at an axial distance from one another.

3. Drive apparatus according to Claim 1 or 2, **characterized in that** the gear mechanism housing (17) has an annular groove (20) in the push-on region for the motor housing (13), a circumferential annular bead (22) which is formed on the motor housing (13) by rolling-burnishing projecting into said annular groove in an interlocking manner.

4. Drive apparatus according to one of Claims 1-3, **characterized in that** a circumferential radial shoulder (21), which is averted from the motor housing (13), is formed on the gear mechanism housing (17) in the push-on region for the motor housing, an annular collar (23) which is bent inwards by roller-burnishing of the motor housing (13) engaging behind the said radial shoulder.

5. Drive apparatus according to one of Claims 1-4, **characterized in that** the motor housing (13) surrounds a stator (14) which comprises a magnetic return path ring (15) and permanent magnet segments (16) which are attached to said magnetic return path ring, and **in that** a circumferential, angular chamfer (18) is screwed into that end of the gear mechanism housing (17) which faces the motor housing (13), and the non-return ring (15) is pushed onto the said chamfer in an interlocking manner until the annular end face of the said non-return ring stops against the radial limb face (181) of the chamfer (18).

6. Drive apparatus according to Claim 4 or 5, **characterized in that** the gear mechanism housing (17) has an annular web (24), which projects radially from the outer circumference, in the push-on region for the motor housing of the said gear mechanism housing, and one annular web face of the said annular web forms the radial shoulder (21) and the other annular web face of the said annular web forms an radial extension of the radial limb face (181) of the chamfer (18).

7. Drive apparatus according to Claim 6, **characterized in that** the motor housing (13) is radially widened at its opening edge (131) which faces the gear mechanism housing (17), and is supported on the two annular web faces of the annular web (24).

## Revendications

1. Dispositif d'entraînement électromoteur pour dispositifs auxiliaires de véhicules automobiles, comme des toits ouvrants, des lève-glaces, des essuie-glaces et similaires, comprenant un boîtier de transmission (17) et un boîtier de moteur en forme de pot (13), qui est poussé avec son bord d'ouverture (131) sur le boîtier de transmission (17) et est fixé à celui-ci, **caractérisé en ce que** le boîtier de moteur (13), dans sa région de poussée venant en prise avec le dessus du boîtier de transmission (17), est écroui dans le boîtier de transmission (17) au moyen d'une connexion par écrouissage.

2. Dispositif d'entraînement selon la revendication 1, **caractérisé en ce que** l'écrouissage est effectué en deux endroits situés à distance axiale l'un de l'autre.

3. Dispositif d'entraînement selon la revendication 1 ou 2, **caractérisé en ce que** le boîtier de transmission (17) présente, dans la région de poussée du boîtier de moteur (13), une rainure annulaire (20) dans laquelle pénètre par engagement positif une moulure annulaire (22) périphérique, estampée dans le boîtier de moteur (13) par écrouissage.

4. Dispositif d'entraînement selon l'une quelconque des revendications 1 à 3, **caractérisé en ce qu'**un épaulement radial périphérique (21), opposé au boîtier de moteur (13) dans la région de poussée sur le boîtier de moteur, est réalisé sur le boîtier de transmission (17), et est engagé par l'arrière par un rebord annulaire (23) cintré vers l'intérieur par écrouissage du boîtier de moteur (13).

5. Dispositif d'entraînement selon l'une quelconque des revendications 1 à 4, **caractérisé en ce que** le boîtier de moteur (13) entoure un stator (14) constitué d'une bague de reflux (15) et de segments d'aimants permanents (16) fixés sur elle, et **en ce que** dans l'extrémité frontale du boîtier de transmission (17) tournée vers le boîtier de moteur (13) est tourné un biseau périphérique de forme angulaire (18), sur lequel la bague de reflux (15) est poussée par engagement positif jusqu'à venir en butée par sa surface frontale de forme annulaire contre la surface de branche radiale (181) du biseau (18).

6. Dispositif d'entraînement selon la revendication 4 ou 5, **caractérisé en ce que** le boîtier de transmission (17) porte dans sa région de poussée du boîtier de moteur, une nervure annulaire (24) saillant radialement depuis la périphérie extérieure, dont une surface de nervure annulaire forme l'épaulement radial (21) et dont l'autre surface de nervure annulaire forme un prolongement radial de la surface de branche radiale (181) du biseau (18).

7. Dispositif d'entraînement selon la revendication 6, **caractérisé en ce que** le boîtier de moteur (13) est élargi radialement, au niveau de son bord d'ouverture (131) tourné vers le boîtier de transmission (17), et s'appuie sur les deux surfaces de nervure annulaires de la nervure annulaire (24).
